# EUROPÄISCHE PATENTSCHRIFT

(11) **EP 2 152 932 B1**
(45) Veröffentlichungstag und Bekanntmachung des Hinweises auf die Patenterteilung: **23.02.2011**
(21) Anmeldenummer: 08760142.3
(22) Anmeldetag: 28.05.2008
(51) Int. Cl.: C23C 18/12

(54) **VERFAHREN ZUM ERZEUGEN EINER TROCKENSCHMIERSTOFF-SCHICHT**
METHOD FOR CREATING A DRY LUBRICANT LAYER
PROCÉDÉ DE PRODUCTION D'UNE COUCHE DE LUBRIFIANT SEC

(30) Priorität: 07.06.2007 DE 102007026626
(43) Veröffentlichungstag der Anmeldung: 17.02.2010
(73) Patentinhaber: Siemens Aktiengesellschaft, 80333 München (DE)
(72) Erfinder: JENSEN, Jens Dahl, 14050 Berlin (DE); KRÜGER, Ursus, 14089 Berlin (DE); WINKLER, Gabriele, 13587 Berlin (DE)
(74) Vertreter: Wolff, Harry
(86) Internationale Anmeldenummer: PCT/EP2008/056547
(87) Internationale Veröffentlichungsnummer: WO 2008/148679

(56) Entgegenhaltungen:
- GB-A- 847 800
- US-A- 4 885 188
- PUTZ J ET AL: "Spin deposition of MoSx thin films" THIN SOLID FILMS, ELSEVIER-SEQUOIA S.A. LAUSANNE, CH, Bd. 351, Nr. 1-2, 30. August 1999 (1999-08-30), Seiten 119-124, XP004183078 ISSN: 0040-6090

## Beschreibung

Die Erfindung betrifft ein Verfahren zum Erzeugen einer Trockenschmierstoff-Schicht aus einem Metallsulfid, bei dem die Trockenschmierstoff-Schicht auf einem Substrat aufgebracht wird.

Ein Verfahren der eingangs angegebenen Art kann der DE 32 25 382 A1 entnommen werden. Hierbei handelt es sich um die Beschichtung einer Schiebehülse eines Kraftfahrzeug-Kupplungsausrückers mit einer Trockenschmierstoff-Schicht, um bei diesem Bauteil eine fortwährende gleitende Beanspruchung zu gewährleisten. Als Trockenschmierstoff kann ein pulverförmiges Molybdändisulfid zum Einsatz kommen, welches in einer Kunststoffmatrix gebunden wird. Die Kunststoffmatrix wird zusammen mit dem Pulver auf die Schiebehülse aufgetragen, und dort ausgehärtet.

Aus der GB 847,800 A, aus der US 4,885,188 A sowie aus Pütz, J. et al., Thin Solid Films 351 (1999), Seiten 119 bis 124 ist es außerdem bekannt, dass Schichten aus Metallsulfiden hergestellt werden können, die sich als Trockenschmierstoff-Schichten eignen. Hierbei wird auf das Substrat ein Beschichtungsstoff aufgebracht, in dem ein Lösungsmittel und gelöste Vorstufen des Metallsulfids enthalten sind. Das mit dem Beschichtungsstoff versehene Substrat wird dann einer Wärmebehandlung unterworfen. Dabei verdampft das Lösungsmittel und die Vorstufen des Metallsulfids werden in die Schicht des Metallsulfids umgewandelt.

Aufgabe der Erfindung ist es, ein Verfahren für verbesserte Trockenschmierstoff-Schichten aus einem Metallsulfid anzugeben, mit dem sich vergleichsweise gute Trockenschmiereigenschaften erzeugen lassen.

Diese Aufgabe wird mit dem eingangs genannten Verfahren erfindungsgemäß dadurch gelöst, dass auf das Substrat zunächst ein Beschichtungsstoff, bestehend aus einem Lösungsmittel und gelösten Vorstufen des Metallsulfids, aufgetragen wird und dass mit dem Beschichtungsstoff versehene Substrat einer Wärmebehandlung unterworfen wird, bei der das Lösungsmittel verdampft und die Vorstufen des Metallsulfids unter Ausbildung der Trockenschmierstoffschicht in das Metallsulfid umgewandelt werden. Mittels des genannten Herstellungsverfahrens lassen sich vorteilhaft Trockenschmierstoff-Schichten erzeugen, die einen verhältnismäßig hohen Anteil an Metallsulfid aufweisen und daher besonders gute Gleiteigenschaften ausweisen.

Das Verfahren des Auftragens von keramischen Vorstufen auf metallische Bauteile zwecks Ausbildung keramischer Schichten auf diesen Bauteilen ist an sich bekannt, und wird beispielsweise in der US 2002/0086111 A1, der WO 2004/013378 A1, der US 2002/0041928 A1, der WO 03/021004 A1 und der WO 2004/104261 A1 beschrieben. Die in diesen Dokumenten beschriebenen Verfahren beschäftigen sich mit der Herstellung von keramischen Beschichtungen auf Bauteilen im allgemeinen, wobei zur Schichterzeugung keramische Vorstufen der zu erzeugenden Keramiken verwendet werden, die nach einem Aufbringen durch eine Wärmebehandlung zu der auszubildenden Keramik umgewandelt werden.

Die Vorstufen für die Keramik, die häufig auch als Precursor bezeichnet werden, beinhalten die Stoffe, aus denen sich der keramische Werkstoff der auszubildenden Schicht zusammensetzt und weisen weiterhin Bestandteile auf, die im Rahmen der bei der Wärmebehandlung des Besichtungsstoffes ablaufenden chemischen Umwandlung zu einer Vernetzung des keramischen Werkstoffes führen. Beispiele für keramische Vorstufen lassen sich den aufgeführten Dokumenten aus dem Stand der Technik entnehmen und müssen in Abhängigkeit des Anwendungsfalles ausgewählt werden.

Es ist beispielsweise möglich, dass die zu bildende Keramik aus einem Oxid und/oder einem Nitrid und/oder einem Oxinitrid besteht. Durch die Bildung von Oxiden, Nitriden oder Oxinitriden lassen sich vorteilhaft besonders stabile Schichten erzeugen. Die Vorstufen solcher Keramiken müssen die Elemente N bzw. O zur Ausbildung der oxidischen, nitridischen oder oxinitridischen Keramik zur Verfügung stellen.

Erfindungsgemäß ist vorgesehen, dass als Vorstufe ein Metallsulfid, insbesondere Molybdändisulfid und als Lösungsmittel eine Monothiocarbonsäure oder eine Dithiocarbonsäure, insbesondere Dithioameisensäure, verwendet wird.

Eine weitere Ausgestaltung der Erfindung sieht vor, dass als Metallsulfid ein Metalloxysulfid hergestellt wird. Dies hat den Vorteil, dass die Trockenschmierstoff-Schicht, die normalerweise bei Verwendung von reinen Sulfiden eine gewissen Anfälligkeit gegen Oxidation aufweist und durch diesen Vorgang in ihrer Funktion beeinträchtigt wird, durch gezieltes Herstellen von Oxysulfid gegen einen Sauerstoffangriff geschützt wird. Hierdurch lassen sich insbesondere in oxidierender Atmosphäre bessere Standzeiten der Trockenschmierstoff-Schicht erreichen.

Es ist vorteilhaft, wenn das Metalloxysulfid aus einer Sulfonsäure, insbesondere Methansulfonsäure und dem Salz und einer Carbonsäure, insbesondere Molybdändiacetat hergestellt wird. Die Verwendung dieser handelsüblichen Substanzen führt vorteilhaft zu einer kostengünstigen Herstellbarkeit der Trockenschmierstoff-Schicht. Weiterhin eignet sich Molybdän insbesondere als Metallkomponente der herzustellenden (Oxy)Sulfid-Keramik, da diese aufgrund einer laminaren Gefügeausbildung besonders gute Gleiteigenschaften aufweist.

Gemäß einer Weiterbildung der Erfindung ist vorgesehen, dass der Beschichtungsstoff zusätzlich mindestens eine Carbonsäure enthält. Durch Zugabe einer Cabonsäure kann insbesondere die Viskosität des Beschichtungsstoffes eingestellt werden, so dass der Beschichtungsstoff in geeigneter Weise für das favorisierte Beschichtungsverfahren vorbereitet werden kann. Der Beschichtungsstoff kann je nach eingestellter Viskosität durch Spritzen, Rakeln, Rollen, Streichen, Tauchen, Schleudern oder andere Verfahren aufgetragen werden.

Eine letzte Ausgestaltung der Erfindung wird erhalten, wenn in dem Beschichtungsstoff Partikel, insbesondere Nanopartikel, enthalten sind, die in die Trockenschmierstoff-Schicht eingebaut werden. Hierbei ist die Wahl unterschiedlicher Arten von Partikeln möglich, beispielsweise können Partikel eines UV-Lichtabsorbers, z. B. Titanoxid oder Zinkoxid eingebaut werden. Damit kann eine Wärmebehandlung der Schicht mittels UV-Lichteinstrahlung erfolgen oder zumindest unterstützt werden. Durch die UV-Lichtabsorber wird der Energiegehalt des Lichtes in dem Beschichtungsstoff in Wärme umgesetzt.

Zusätzlich können weitere Feststoffe (Oxide, Nitride, Boride, Carbide und Metalle) dem Beschichtungsstoff zugesetzt werden. Außerdem können Farbstoffe in Form von Pigmenten zugesetzt werden, um der Trockenschmierstoff-Schicht eine bestimmte Farbe zu verleihen. Dies ist z. B. vorteilhaft, um den Verschleiß der Trockenschmierstoff-Schicht durch einen Farbumschlag der Oberfläche nachweisbar zu machen. Die Feststoffpartikel können weiterhin zu einer weiteren Verbesserung der Gleiteigenschaften der Oberfläche beitragen.

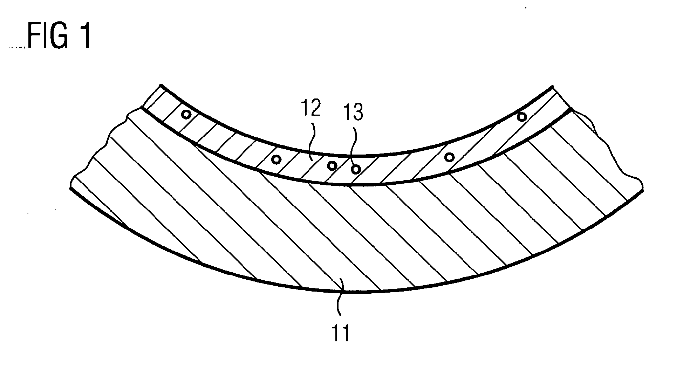

Weitere Einzelheiten der Erfindung werden nachfolgend anhand der Zeichnung beschrieben, deren einzige Figur 1 den Schnitt durch eine Lagerschale mit einer Trockenschmierstoff-Beschichtung zeigt, die nach einem Ausführungsbeispiel des erfindungsgemäßen Verfahrens hergestellt ist.

Eine Lagerschale gemäß der Figur 1 bildet ein Substrat 11, welches mittels einer Trockenschmierstoff-Schicht 12 beschichtet ist. In diese Trockenschmierstoff-Schicht 12 sind Nanopartikel 13 eingebettet, welche beispielsweise bevorzugt an der Oberfläche angeordnet sein können (Ausbildung der Trockenschmierstoff-Schicht als Gradientenschicht). Sind die Nanopartikel durch einen Farbstoff gebildet, so wird die Einfärbung der Trockenschmierstoff-Schicht bei fortschreitendem Verschleiß verschwinden, da in den tieferen Regionen der Trockenschmierstoff-Schicht keine Farbstoff-Nanopartikel 13 vorgesehen sind.

Alternativ zu einer Gradientenschicht könnte in der Lagerschale (Substrat 11) auch eine mehrlagige Schicht gebildet werden, wobei die Farbstoffpartikel nur in der untersten Lage enthalten sind (nicht dargestellt). Ein Farbumschlag hin zum verwendeten Farbstoff zeigt dann die Notwendigkeit eines Auswechselns der Lagerschale an.

Besonders bevorzugt ist die Trockenschmierstoff-Schicht 12 als Metalloxysulfid ausgebildet - insbesondere als Molybdänoxysulfid. Das Oxysulfid hat den Vorzug, dass die molekulare Gleitbewegung, die die positiven Eigenschaften als Trockenschmierstoff-Schicht hervorrufen und vom Sulfid allgemein bekannt sind, auch in der Schichtstruktur des Oxysulfids möglich sind. Mit dem gleichzeitigen Einbau von Sauerstoff- und Schwefelatomen bei der Schichtbildung verringert sich vorteilhaft jedoch auch die Affinität der Molybdänatome zum Luftsauerstoff, weswegen die Oxysulfidschicht eine geringere Anfälligkeit gegen Korrosion aufweisst.

Die mit Sulfid vergleichbaren Gleiteigenschaften des Oxysulfids sind darauf zurückzuführen, dass Schwefel und Sauerstoff homologe Elemente sind. Daher kann der Sauerstoff in den im Beschichtungsstoff als Vorstufen zum Einsatz kommenden Alkoholen und Carbonsäuren ohne weiteres durch Schwefel ersetzt werden. Als entsprechende Verbindungen ergeben sich Alkanthiole (Mercaptane), bzw. Mono- und Dithiocarbonsäuren. Die Alkanthiole reagieren stärker sauer als die analogen Alkohole, so dass die Anätzung der Werkstückoberfläche, die für die Bildung der Festschmierstoff-Schicht 12 aus Metallsulfiden bzw. Metalloxysulfiden erforderlich ist, auch durch diese Alkanthiole erfolgen kann. Die zum Einsatz kommenden Kabonsäuren, Mono- und Dithiocarbonsäuren sowie Alkanthiole beinhalten weiterhin Kohlenstoffketten, die zwischen einem und 24 Kohlenstoffatome aufweisen. Die Kohlenwasserstoffketten können gerade verzweigt oder ringförmig aufgebaut sein. Es können neben Einfachbindungen auch Zwei- und Dreifachbindungen vorliegen. Genauso ist es möglich, dass ein Benzolring enthalten ist. Weiterhin können Wasserstoffatome der Kohlenwasserstoffkette durch Alkyl-, Alkenyl-, Alkynyl- oder Alkthiogruppen ersetzt sein. Beispielhaft werden für die im Beschichtungsstoff zum Einsatz kommenden Lösungsmittel exemplarisch folgende Summenformeln angegeben.
Monothiocarbonsäuren: R-COSH
Dithiocarbonsäuren: R-CSSH
Carbonsäuren: R-COOH
Alkanthiole: R-CH₂SH

Hierbei steht R für einen Alkyl-, Alkenyl-, Alkynyl- oder Arylrest, der seinerseits wiederum verzweigt sein kann.

Für die Bildung der Metallsulfide sind die im Beschichtungsstoff vorhandenen organischen und metallorganischen Flüssigkeiten verantwortlich, die anstelle des Sauerstoffs Schwefel enthalten. Dieser ist bevorzugt Teil einer Thiol-Gruppe.

Aus einem Beschichtungsstoff mit organischen und metallorganischen Verbindungen, die sowohl Sauerstoff als auch Schwefel in den funktionellen Gruppen enthalten (z. B. Molybdändiacetat und Ethanthiol oder Methylsulfonsäure) lassen sich Oxysulfid-Verbindungen, wie z. B. Molybdänoxysulfid herstellen.

## Patentansprüche

1. Verfahren zum Erzeugen einer Trockenschmierstoff-Schicht (12) aus einem Metallsulfid, bei dem die Trockenschmierstoff-Schicht (12) auf einem Substrat (11) aufgebracht wird, wobei
- auf das Substrat (11) zunächst ein Beschichtungsstoff, bestehend aus einem Lösungsmittel und gelösten Vorstufen des Metallsulfids, aufgetragen wird und
- das mit dem Beschichtungsstoff versehene Substrat (11) einer Wärmebehandlung unterworfen wird, bei der das Lösungsmittel verdampft und die Vorstufen des Metallsulfids unter Ausbildung der Trockenschmierstoff-Schicht (12) in das Metallsulfid umgewandelt werden,
**dadurch gekennzeichnet,**
**dass** als Vorstufe ein Metallsulfid, insbesondere Molybdändisulfid, und als Lösungsmittel eine Monothiocarbonsäure oder eine Dithiocarbonsäure, insbesondere Dithioameisensäure, verwendet wird.

## Claims

1. Process for producing a dry lubricant coating (12) of a metal sulfide, in which the dry lubricant coating (12) is applied to a substrate (11), wherein
- a coating material consisting of a solvent and dissolved precursors of the metal sulfide is initially applied to the substrate (11), and
- the substrate (11) provided with the coating material is subjected to heat treatment, in which the solvent evaporates and the precursors of the metal sulfide are converted into the metal sulfide to form the dry lubricant coating (12),
**characterized**
**in that** the precursor used is a metal sulfide, in particular molybdenum disulfide, and the solvent used is a monothiocarboxylic acid or a dithiocarboxylic acid, in particular dithioformic acid.

## Revendications

1. Procédé de production d'une couche ( 12 ) de lubrifiant sec en un sulfure de métal dans lequel on dépose la couche ( 12 ) de lubrifiant sec sur un substrat ( 11 ), dans lequel
- on dépose sur le substrat ( 11 ) d'abord une substance de revêtement constituée d'un solvant et de précurseurs dissous du sulfure métallique, et
- on soumet le substrat ( 11 ) muni de la substance de revêtement à un traitement thermique, dans lequel le solvant s'évapore et les précurseurs du sulfure métallique sont transformés en le sulfure métallique en formant la couche ( 12 ) de lubrifiant sec,
**caractérisé**
**en ce que** l'on utilise comme précurseur un sulfure métallique, notamment un sulfure de molybdène, et comme solvant un acide monothiocarboxylique ou un acide dithiocarboxylique, notamment de l'acide dithioformique.
